(19) Europäisches Patentamt
European Patent Office
Office européen des brevets

(11) EP 3 810 694 B1

(12) EUROPEAN PATENT SPECIFICATION

(45) Date of publication and mention of the grant of the patent:
**02.03.2022 Bulletin 2022/09**

(21) Application number: **19730314.2**

(22) Date of filing: **11.06.2019**

(51) International Patent Classification (IPC):
***C08L 55/02*** (2006.01) ***C08L 69/00*** (2006.01)
***C08L 25/16*** (2006.01) ***C08L 25/14*** (2006.01)

(52) Cooperative Patent Classification (CPC):
(C-Sets available)
**C08F 279/04; C08L 25/14; C08L 25/16; C08L 55/02; C08L 69/00;** C08L 2205/02; C08L 2205/03; C08L 2205/035 (Cont.)

(86) International application number:
**PCT/EP2019/065130**

(87) International publication number:
**WO 2019/243107 (26.12.2019 Gazette 2019/52)**

(54) **HIGH HEAT RESISTANT IMPACT MODIFIED POLYCARBONATE BLEND**

HITZEBESTÄNDIGE SCHLAGZÄHE POLYCARBONATMISCHUNG

MÉLANGE DE POLYCARBONATE MODIFIÉ PAR IMPACT ET RÉSISTANT AUX TEMPÉRATURES ÉLEVÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2018 EP 18178735**

(43) Date of publication of application:
**28.04.2021 Bulletin 2021/17**

(73) Proprietor: **INEOS Styrolution Group GmbH**
**60325 Frankfurt (DE)**

(72) Inventors:
- **NIESSNER, Norbert**
  **67159 Friedelsheim (DE)**
- **MICHELS, Gisbert**
  **51375 Leverkusen (DE)**
- **EISENTRÄGER, Frank**
  **50996 Köln (DE)**
- **SONG, HanBok**
  **Seoul (KR)**
- **MADHAV, Shridhar**
  **Vadodara 390002 (IN)**
- **GEVARIA, Kirit**
  **Vadodara 390008 (IN)**
- **BHARADWAJ, Pankaj**
  **Mill, Pin-262802 (IN)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**WO-A1-97/45484** **CN-A- 106 633 769**
**KR-B1- 100 774 821** **US-A- 4 569 969**

Remarks:
The file contains technical information submitted after the application was filed and not included in this specification



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

(Cont. next page)

(52) Cooperative Patent Classification (CPC): (Cont.)

C-Sets
**C08F 279/04, C08F 212/08, C08F 220/44;**
**C08L 25/14, C08L 69/00, C08L 55/02, C08L 25/16, C08K 5/103, C08K 5/526, C08K 5/1345;**
**C08L 25/16, C08L 69/00, C08L 55/02, C08K 5/103, C08K 5/526, C08K 5/1345;**
**C08L 25/16, C08L 69/00, C08L 55/02, C08L 25/14, C08K 5/103, C08K 5/526, C08K 5/1345;**
**C08L 55/02, C08L 69/00, C08L 25/16, C08L 25/14, C08K 5/103, C08K 5/526, C08K 5/1345;**
**C08L 69/00, C08L 25/16, C08L 55/02, C08L 25/14;**
**C08L 69/00, C08L 55/02, C08L 25/16, C08L 25/14**

## Description

The present invention relates to impact modified polycarbonate molding compositions having a high heat resistance, in particular resistance to thermal cycling, high impact strength, chemical resistance and dimensional stability, a process for the preparation and the uses for applications in the industrial, household and automotive sector.

Polycarbonate (PC) is characterized by a high transparency, excellent toughness, thermal stability and dimensional stability over a wide temperature range. However, there are few limitations, which constraints its range of applications. Reduced melt flow makes it difficult to process. Moreover, it has very limited scratch resistance and chemical resistance than certain engineering polymers. The inflexibility and lack of mobility of backbone prevents polycarbonate from developing a significant crystallinity. This lack of crystalline structure (the amorphous nature of the polymer) leads to transparency and higher notch sensitivity. To resolve such problems and to reduce the sensitivity to these conditions, PC is often impact modified with acrylonitrile-butadiene-styrene (ABS) graft copolymer. PC/ABS blends combine the beneficial properties of both materials i.e., the mechanical and thermal properties of PC as well as ease of processing and notched impact resistance of the ABS copolymer.

US-Patents 4,569,969 and 4,663,389 disclose molding compositions having improved impact properties comprising i) polycarbonate, ii) ABS-graft copolymers and a iii) S/MA/MMA (= styrene/maleic anhydride/methyl methacrylate) terpolymer (weight ratio of components i) to iii) 40/30/30).

US 2013/0158183 discloses impact modified polycarbonate compositions comprising ABS graft rubber copolymers and optionally a copolymer C) of at least one monomer selected from vinyl aromatic monomers (styrene, $\alpha$-methyl styrene), vinyl cyanides (AN), unsaturated carboxylic acids derivatives thereof (incl. MMA, maleic anhydride). Copolymer C) is preferably a SAN copolymer (all examples).

The afore-mentioned references are silent about the heat resistance of said impact modified PC/ABS compositions, but it is known that the heat resistance of such prior art blends still is in need of improvement.

CN 104177754 discloses a heat resistant blend comprising 60 to 70 wt.-% ABS, 30 to 40 wt.-% polycarbonate and 0.1 to 5 wt.-% of a heat resistant agent made from a SAN-copolymer and maleic anhydride.

It is one object of the invention to provide polycarbonate molding compositions which have a high heat resistance, in particular resistance to thermal cycling and high impact strength. Moreover, said molding compositions shall have a good chemical resistance and improved dimensional stability (e.g. low coefficient of linear thermal expansion (CLTE) and high Vicat Softening Temperature). Furthermore, in order to provide a cost effective and efficient molding composition, the polycarbonate content of the molding composition should be limited to the lowest possible level without compromising the required engineering properties of usual PC/ABS blends.

One aspect of the invention is a thermoplastic molding composition comprising (or consisting of) components A, B, C, D and E:

(A) 10 to 40 wt.-%, preferably 15 to 35 wt.-%, more preferably 18 to 30 wt.-%, most preferably 18 to 25 wt.-%, of at least one graft copolymer (A) consisting of 15 to 60 wt.-% of a graft sheath (A2) and 40 to 85 wt.-% of a graft substrate, an agglomerated butadiene rubber latex (A1), where (A1) and (A2) sum up to 100 wt.-%,

obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof,
in the presence of at least one agglomerated butadiene rubber latex (A1) with a median weight particle diameter $D_{50}$ of 150 to 800 nm,
where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;

(B) 25 to 50 wt.-%, preferably 28 to 45 wt.-%, more preferably 29 to 41 wt.-%, most preferably 33 to 40 wt.-%, of at least one aromatic polycarbonate;

(C) 20 to 40 wt.-%, preferably 23 to 35 wt.-%, more preferably 24 to 32 wt.-%, most preferably 25 to 32 wt.-% of at least one copolymer (C) of alpha-methylstyrene and acrylonitrile in a weight ratio of from 95:5 to 50:50, preferably 75:25 to 55:45, it being possible for alpha-methylstyrene and/or acrylonitrile to be partially (less than 50 wt.-%) replaced by methyl methacrylate, maleic anhydride and/or 4-phenylstyrene;

(D) 10 to 25 wt.-%, preferably 12 to 22 wt.-%, more preferably 13 to 20 wt.-%, most preferably 13 to 18 wt.-% of at least one terpolymer (D) of 50 to 84 wt.-% vinylaromatic monomer, preferably styrene, 15 to 35 wt.-% $\alpha$, $\beta$ ethylenically unsaturated dicarboxylic cyclic anhydride, preferably maleic acid anhydride, and 1 to 25 wt.-% $C_1$-$C_3$-alkyl-(meth)acr-

ylate, preferably methyl methacrylate;

(E) 0.3 to 5 wt.-%, preferably 0.4 to 3 wt.-%, more preferably 0.5 to 2 wt.-%, most preferably 0.6 to 1 wt.-% of further additives and/or processing aids (E);

where the components A, B, C, D and E, sum to 100 wt.-%.

Wt.-% means percent by weight.

The term "diene" means a conjugated diene; "butadiene" means 1,3-butadiene.

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value. In the present application the weight-average particle diameter $D_w$, in particular the median weight particle diameter $D_{50}$, is determined with a disc centrifuge (e.g.: CPS Instruments Inc. DC 24000 with a disc rotational speed of 24 000 rpm). The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum}\ (\ n_i * d_i^4\ )\ /\ \text{sum}(\ n_i * d_i^3\ )$$

$n_i$: number of particles of diameter $d_i$.

The summation is performed from the smallest to largest diameter of the particles size distribution. It should be mentioned that for a particle size distribution of particles with the same density which is the case for the starting rubber latices and agglomerated rubber latices the volume average particle size diameter $D_v$ is equal to the weight average particle size diameter $D_w$.

Preferably, the thermoplastic molding composition of the invention comprises (or consists of):

15 to 35 wt.-% component (A),
28 to 45 wt.-% component (B),
23 to 35 wt.-% component (C),
12 to 22 wt.-% component (D),
0.4 to 3 wt.-% component (E).

More preferably, the thermoplastic molding composition of the invention comprises (or consists of):

18 to 30 wt.-% component (A),
29 to 41 wt.-% component (B),
24 to 32 wt.-% component (C),
13 to 20 wt.-% component (D),
0.5 to 2 wt.-% component (E).

Most preferably, the thermoplastic molding composition of the invention comprises (or consists of):

18 to 25 wt.-% component (A),
33 to 40 wt.-% component (B),
25 to 32 wt.-% component (C),
13 to 18 wt.-% component (D),
0.6 to 1 wt.-% component (E).

In addition to the components (A), (B), (C), (D) and (E), the inventive thermoplastic molding composition may contain further rubber-free thermoplastic resins (TP) not composed of vinyl monomers, such thermoplastic resins (TP) being used in amounts of up to 1 parts by weight, preferably up to 0.8 parts by weight and particularly preferably up to 0.6 parts by weight (in each case based on 100 parts by weight of the total of (A), (B), (C), (D) and (E).

The thermoplastic resins (TP) as the rubber-free copolymer in the thermoplastic molding composition according to the invention which can be used in addition to the mentioned components (A), (B), (C), (D) and (E) include for example polycondensation products, for example polyesters and polyamides. Suitable thermoplastic polyesters and polyamides are known and described on pages 16 to 18 of WO 2012/022710. Preference is given to thermoplastic molding compositions not comprising a further component TP.

Component (A)

Graft copolymer (A) (= component (A)) is known and described e.g. in WO 2012/022710, WO 2014/170406 and WO 2014/170407.

Graft copolymer (A) consists of 15 to 60 wt.-% of a graft sheath (A2) and 40 to 85 wt.-% of a graft substrate - an agglomerated butadiene rubber latex - (A1), where (A1) and (A2) sum up to 100 wt.-%.

Preferably graft copolymer (A) is obtained by emulsion polymerization of styrene and acrylonitrile in a weight ratio of 80:20 to 65:35, preferably 74:26 to 70:30, to obtain a graft sheath (A2), it being possible for styrene and/or acrylonitrile to be replaced partially (less than 50 wt.-%, preferably less than 20 wt.-%, more preferably less than 10 wt.-%, based on the total amount of monomers used for the preparation of (A2)) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm, preferably 180 to 700 nm, more preferably 200 to 600 nm, most preferably 250 to 500 nm, in particular preferably 300 to 400 nm.

Preferably the at least one, preferably one, graft copolymer (A) consists of 20 to 50 wt.-% of a graft sheath (A2) and 50 to 80 wt.-% of a graft substrate (A1). Preferably graft copolymer (A) consists of 30 to 45 wt.-% of a graft sheath (A2) and 55 to 70 wt.-% of a graft substrate (A1). Preferably graft copolymer (A) consists of 35 to 45 wt.-% of a graft sheath (A2) and 55 to 65 wt.-% of a graft substrate (A1).

Preferably the obtained graft copolymer (A) has a core-shell-structure; the graft substrate (a1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 95:5 to 65:35, preferably 80:20 to 65:35, more preferably 74:26 to 70:30.

The agglomerated rubber latex (A1) may be obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride, or alternatively, by agglomeration with a dispersion of an acrylate copolymer.

The at least one, preferably one, starting butadiene rubber latex (S-A1) preferably has a median weight particle diameter $D_{50}$ of equal to or less than 110 nm, particularly equal to or less than 87 nm.

The term "butadiene rubber latex" means polybutadiene latices produced by emulsion polymerization of butadiene and less than 50 wt.-% (based on the total amount of monomers used for the production of polybutadiene polymers) of one or more monomers that are copolymerizable with butadiene as comonomers.

Examples for such monomers include isoprene, chloroprene, acrylonitrile, styrene, alpha-methylstyrene, $C_1C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferably, butadiene is used alone or mixed with up to 30 wt.-%, preferably up to 20 wt.-%, more preferably up to 15 wt.-% styrene and/or acrylonitrile, preferably styrene.

Preferably the starting butadiene rubber latex (S-A1) consists of 70 to 99 wt.-% of butadiene and 1 to 30 wt.-% styrene. Preferably the starting butadiene rubber latex (S-A1) consists of 85 to 99 wt.-% of butadiene and 1 to 15 wt.-% styrene. Preferably the starting butadiene rubber latex (S-A1) consists of 85 to 95 wt.-% of butadiene and 5 to 15 wt.-% styrene.

The agglomerated rubber latex (graft substrate) (A1) may be obtained by agglomeration of the above-mentioned starting butadiene rubber latex (S-A1) with at least one acid anhydride, preferably acetic anhydride or mixtures of acetic anhydride with acetic acid, in particular acetic anhydride.

The preparation of graft copolymer (A) is described in detail in WO 2012/022710. It can be prepared by a process comprising the steps: $\alpha$) synthesis of starting butadiene rubber latex (S-A1) by emulsion polymerization, $\beta$) agglomeration of latex (S-A1) to obtain the agglomerated butadiene rubber latex (A1) and $\gamma$) grafting of the agglomerated butadiene rubber latex (A1) to form a graft copolymer (A).

The synthesis (step $\alpha$)) of starting butadiene rubber latices (S-A1) is described in detail on pages 5 to 8 of WO 2012/022710. Preferably the starting butadiene rubber latices (S-A1) are produced by an emulsion polymerization process using metal salts, in particular persulfates (e.g. potassium persulfate), as an initiator and a rosin-acid based emulsifier.

As resin or rosin acid-based emulsifiers, those are being used in particular for the production of the starting rubber latices by emulsion polymerization that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%. Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or

partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

Then the obtained starting butadiene rubber latex (S-A1) is subjected to agglomeration (step β)) to obtain agglomerated rubber latex (A1). The agglomeration with at least one acid anhydride is described in detail on pages 8 to 12 of WO 2012/022710.

Preferably acetic anhydride, more preferably in admixture with water, is used for the agglomeration. Preferably the agglomeration step β) is carried out by the addition of 0.1 to 5 parts by weight of acetic anhydride per 100 parts of the starting rubber latex solids.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step α) are used. The pH value is adjusted by use of bases such as sodium hydroxide solution or preferably potassium hydroxide solution.

The obtained agglomerated rubber latex (A1) has a median weight particle diameter $D_{50}$ of generally 150 to 800 nm, preferably 180 to 700 nm, more preferably 200 to 600 nm, most preferably 250 to 500 nm, in particular preferably 300 to 400 nm. The agglomerated latex rubber latex (A1) obtained according to this method is preferably mono-modal.

Alternatively the agglomeration can be done by adding a dispersion of an acrylate polymer.

Preference is given to the use of dispersions of copolymers of $C_1$ to $C_4$-alkyl acrylates, preferably of ethyl acrylate, with from 0.1 to 10% by weight of monomers which form polar polymers, examples being acrylic acid, methacrylic acid, acrylamide, methacrylamide, N-methylol methacrylamide and N-vinylpyrrolidone. Preference is given to a copolymer of 92 to 98 wt.-% of ethyl acrylate and 2 to 8 wt.-% of methacrylamide. The agglomerating dispersion may, if desired, also contain more than one of the acrylate polymers mentioned.

In general, the concentration of the acrylate polymers in the dispersion used for agglomeration should be from 3 to 40% by weight. For the agglomeration, from 0.2 to 20 parts by weight, preferably from 1 to 5 parts by weight, of the agglomerating dispersion are used for each 100 parts of the rubber latex, the calculation in each case being based on solids. The agglomeration is carried out by adding the agglomerating dispersion to the rubber. The addition rate is usually not critical, and the addition usually takes from 1 to 30 minutes at from 20 to 90°C, preferably from 30 to 75°C.

Acrylate copolymers having a polydispersity U of less than 0.27 and a $d_{50}$ value of from 100 to 150 nm are preferably used for the agglomeration. Such acrylate copolymers are described in detail on pages 8 to 14 of WO 2014/170406.

In case of agglomeration with a dispersion of an acrylate copolymer generally the obtained graft substrate (A1) has a bimodal particle size distribution of nonagglomerated particles having a $d_{50}$ value in the range of from 80 to 120 nm and of agglomerated particles having a $d_{50}$ value in the range of 150 to 800 nm, preferably 180 to 700 nm, more preferably 200 to 600 nm, most preferably 250 to 500 nm.

In step γ) the agglomerated rubber latex (A1) is grafted to form the graft copolymer (A). Suitable grafting processes are described in detail on pages 12 to 14 of WO 2012/022710.

Graft copolymer (A) is obtained by emulsion polymerization of styrene and acrylonitrile - optionally partially replaced by alpha-methylstyrene, methyl methacrylate and/or maleic anhydride - in a weight ratio of 95:5 to 65:35 to obtain a graft sheath (A2) (in particular a graft shell) in the presence of the above-mentioned agglomerated butadiene rubber latex (A1).

Preferably graft copolymer (A) has a core-shell-structure.

The grafting process of the agglomerated rubber latex (A1) of each particle size is preferably carried out individually. Preferably the graft polymerization is carried out by use of a redox catalyst system, e.g. with cumene hydroperoxide or tert.-butyl hydroperoxide as preferable hydroperoxides. For the other components of the redox catalyst system, any reducing agent and metal component known from literature can be used.

According to a preferred grafting process which is carried out in presence of at least one agglomerated butadiene rubber latex (A1) with a median weight particle diameter $D_{50}$ of preferably 280 to 350 nm, more preferably 300 to 330 nm, in an initial slug phase 15 to 40 wt.-%, more preferably 26 to 30 wt.-%, of the total monomers to be used for the graft sheath (A2) are added and polymerized, and this is followed by a controlled addition and polymerization of the remaining amount of monomers used for the graft sheath (A2) till they are consumed in the reaction to increase the graft ratio and improve the conversion. This leads to a low volatile monomer content of graft copolymer (A) with better impact transfer capacity.

Further details to polymerization conditions, emulsifiers, initiators, molecular weight regulators used in grafting step γ) are described in WO 2012/022710.

Component B

Suitable aromatic polycarbonates (= component (B)) are known (see, for example, DE-A 3 832 396), for example which may be prepared by reaction of diphenols of formulae (III) and (IV)

(III) 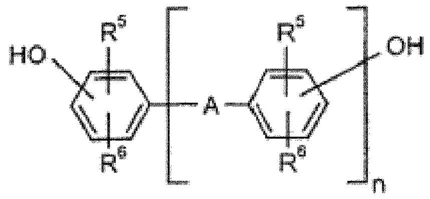

(IV) 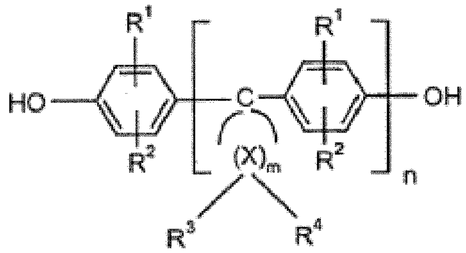

wherein A is a single bond, $C_1$-$C_5$-alkylene, $C_2$-$C_5$-alkylidene, $C_5$-$C_6$-cycloalkylidene, -0-, -S-, -SO-, -$S0_2$- or - CO-;

$R^5$ and $R^6$ each independently of the other represents hydrogen, methyl or halogen, especially hydrogen, methyl, chlorine or bromine;
$R^1$ and $R^2$ each independently of the other represents hydrogen, halogen, preferably chlorine or bromine, $C_1$-$C_8$-alkyl, preferably methyl, ethyl, $C_5$-$C_6$-cycloalkyl, preferably cyclohexyl, $C_6$-$C_{10}$-aryl, preferably phenyl, or $C_7$-$C_{12}$-aralkyl, preferably phenyl-$C_1C_4$-alkyl, especially benzyl;
m is an integer from 4 to 7, preferably 4 or 5; n is 0 or 1 ,

$R^3$ and $R^4$ is selected individually for each X and each independently of the other represents hydrogen or $C_1$-$C_6$-alkyl, and X represents carbon,
with carbonic acid halides, preferably phosgene, by interfacial polycondensation, or with phosgene by polycondensation in homogeneous phase (the so-called pyridine process), wherein the molecular weight may be adjusted in a known manner by an appropriate amount of known chain terminators.

Suitable diphenols of formulae (III) and (IV) are, for example, hydroquinone, resorcinol, 4,4'- dihydroxydiphenyl, 2,2-bis-(4-hydroxyphenyl)-propane, 2,4-bis-(4-hydroxyphenyl)-2-methylbutane, 2,2- bis-(4-hydroxy-3,5-dimethylphenyl)-propane, 2,2-bis-(4-hydroxy-3,5-dichlorophenyl)-propane, 2,2-bis- (4-hydroxy-3,5-dibromophenyl)-propane, 1 ,1-bis-(4-hydroxyphenyl)-cyclohexane, 1,1-bis-(4- hydroxyphenyl)-3,3,5-trimethylcyclohexane, 1,1-bis-(4-hydroxyphenyl)-3,3-dimethylcyclohexane, 1,1-bis-(4-hydroxyphenyl)-3,3,5,5-tetramethylcyclohexane or 1,1-bis-(4-hydroxyphenyl)-2,4,4-trimethylcyclopentane.

Preferred diphenols of formula (III) are 2,2-bis-(4-hydroxyphenyl)-propane (= bisphenol A) and 1,1-bis-(4-hydroxyphenyl)-cyclohexane, and the preferred phenol of formula (IV) is 1,1-bis-(4- hydroxyphenyl)-3,3,5-trimethylcyclohexane; 2,2-bis-(4-hydroxyphenyl)-propane is in particular preferred. It is also possible to use mixtures of said diphenols.

Preferred polycarbonates are such based on 2,2-bis-(4-hydroxyphenyl)-propane alone or on 2,2-bis-(4-hydroxyphenyl)-propane in mixture with up to 30 mol.-% of at least one of the afore-mentioned diphenols. In particular polycarbonates are based on 2,2-bis-(4-hydroxyphenyl)-propane alone.

Furthermore suitable as component (B) alone or in mixture with the afore-mentioned polycarbonates are polycarbonates comprising repeating units derived from 2-phenyl-3,3-bis(4-hydroxyphenyl)-phthalimidine (PPPBP) as described in US 2010/0168311 A1 and US 2009/0318604 A1. Preferably such polycarbonates are a copolymer of PPPBP and bisphenol A or a terpolymer of PPPBP, hydroquinone and methylhydroquinone.

Suitable chain terminators are, for example, phenol, p-tert-butylphenol, long-chain alkylphenols such as 4-(1,3-tetramethylbutyl)phenol according to DE-A 2 842 005, monoaikylphenols, dialkylphenols having a total of from 8 to 20 carbon atoms in the alkyl substituents according to DE-A 3 506 472, such as p-nonylphenol, 2,5-di-tert-butylphenol, p-tert-octylphenol, p-dodecylphenol, 2-(3,5- dimethylheptyi)-phenol and 4-(3,5-dimethylheptyl)-phenol. The amount of chain terminators required is generally from 0.5 to 10 mol %, based on the sum of the diphenols (III) and (IV).

The polycarbonates that are suitable may be linear or branched; branched products are preferably obtained by incorporation of from 0.05 to 2.0 mol %, based on the sum of the diphenols used, of compounds having a functionality of three or more than three, for example compounds having three or more than three phenolic OH groups.

The polycarbonates that are suitable may contain aromatically bonded halogen, preferably bromine and/or chlorine; preferably, they are halogen-free.

They have molecular weights (Mw, weight average), determined, for example, by ultra-centrifugation, scattered light measurement or gel permeation chromatography using polystyrene standards, of from 10,000 to 200,000, preferably from 20,000 to 80,000 g/mol. Preferably the afore-mentioned polycarbonates have a melt flow index (MFI), determined according to ISO 1133:1-2011 standard method, 300°C/1.2 kg load, of from 8 to 15 g/10 min, in particular 9 to 11 g/10 min.

Component (C)

Preferably copolymer (C) (= component (C)) is a copolymer of alpha-methylstyrene and acrylonitrile in a weight ratio of from 75:25 to 55:45, preferably 70:30 to 60:40, it being possible for alpha-methylstyrene and/or acrylonitrile to be partially (less than 50 wt.-%, preferably less than 20 wt.-%, more preferably less than 10 wt.-%, based on the total amount of monomers used for the preparation of (C)) replaced by methyl methacrylate, maleic anhydride and/or 4-phenylstyrene.

It is preferred that alpha-methylstyrene and acrylonitrile are not partially replaced by one of the above-mentioned comonomers. Component (C) is preferably a copolymer of alpha-methylstyrene and acrylonitrile.

Such copolymers preferably have weight average molecular weights Mw of from 20,000 to 220,000 g/mol. Their melt flow index (MFI) is preferably 5 to 9 g/10 min (measured according to ASTM D 1238 (ISO 1133:1-2011) at 220°C and 10 kg load). Details relating to the preparation of such copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Component (D)

Preferably component (D) is one terpolymer of 50 to 84 wt.-% vinylaromatic monomer, 15 to 35 wt.-% $\alpha$, $\beta$ ethylenically unsaturated dicarboxylic cyclic anhydride, and 1 to 25 wt.-% $C_1$-$C_3$-alkyl-(meth)acrylate, preferably $C_1$-$C_3$-alkyl-methacrylate.

The amounts of the afore-mentioned monomers comprised in terpolymer (D) add up to 100 wt.-% in total.

Component (D) is preferably a styrene-maleic anhydride methyl methacrylate terpolymer. The styrene may be replaced in whole or in part by other vinylaromatic monomers, such as alphamethyl styrene, chloro-styrene, bromostyrene, p-methyl styrene and vinyl toluene. Similarly the maleic anhydride can be replaced in whole or in part by another unsaturated dicarboxylic anhydride such as itaconic, aconitic or citraconic anhydride. Similarly, the methyl methacrylate can be replaced in whole or in part by other $C_1$ to $C_3$ alkyl acrylates or $C_2$ to $C_3$ alkyl methacrylates.

Preferably component (D) is a styrene-maleic anhydride methyl methacrylate terpolymer wherein none of the monomers is replaced by others.

Preferably in terpolymer (D) the anhydride content is 15 to 30 wt.-%, the (meth)acrylate (in particular methyl methacrylate) content is 5 to 25% by weight and the vinyl aromatic monomer (in particular styrene) content is 50 to 80 wt.-%.

Terpolymer (D) is conveniently prepared by dissolving the vinyl aromatic monomer and the alkyl(meth)acrylate in a suitable solvent, and then polymerizing the solution with the anhydride component in the manner described in, for example, U.S. Pat. Nos. 2,971,939, 3,336,267 and 3,919,354.

Terpolymers (D) as described above having a Vicat Softening Temperature (ISO 306, 50N) in the range of from 130 to 150°C are preferably used.

Suitable terpolymers (D) for use in accordance with the invention are commercially available from Denka Company, Japan as Resisfy® grade R-310.

Component (E)

Various additives and/or processing aids (E) (= component (E)) may be added to the molding compounds according to the invention in amounts of from 0.3 to 5 wt.-%, preferably 0.4 to 3 wt.-%, more preferably 0.5 to 2 wt.-%,

most preferably 0.6 to 1 wt.-% as assistants and processing additives. Suitable additives and/or processing aids (E) include all substances customarily employed for processing or finishing the polymers.

Examples include, for example, dyes, pigments, colorants, fibers/fillers, antistats, antioxidants, stabilizers for improving thermal stability, stabilizers for increasing photostability, stabilizers for enhancing hydrolysis resistance and chemical resistance, anti-thermal decomposition agents, dispersing agents, and in particular external/internal lubricants that are useful for production of molded bodies/articles.

These additives and/or processing aids may be admixed at any stage of the manufacturing operation, but preferably at an early stage in order to profit early on from the stabilizing effects (or other specific effects) of the added substance.

Preferably component (E) is at least one lubricant and at least one antioxidant.

Suitable lubricants/glidants and demolding agents include stearic acids, stearyl alcohol, stearic esters, amide waxes (bisstearylamide, in particular ethylenebisstearamide), polyolefin waxes and/or generally higher fatty acids, derivatives thereof and corresponding fatty acid mixtures comprising 12 to 30 carbon atoms.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof.

It is also possible to use mixtures of different antioxidants. It is possible in principle to use any compounds which are customary in the trade or suitable for styrene copolymers, for example antioxidants from the Irganox range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

For further additives and/or processing aids, see, for example, "Plastics Additives Handbook", Ed. Gächter and Muller, 4th edition, Hanser Publ., Munich, 1996.

Specific examples of suitable additives and/or processing aids are mentioned on pages 23 to 26 of WO 2014/170406.

Preparation of Thermoplastic Molding Composition

The thermoplastic molding composition of the invention may be produced from the components (A), (B), (C), (D) and (E), and optionally further polymers (TP) by any known method. However, it is preferable when the components are premixed and blended by melt mixing, for example conjoint extrusion, preferably with a twin-screw extruder, kneading or rolling of the components. This is done at temperatures in the range of from 180°C to 300°C, preferably from 200°C to 280°C, more preferably 220°C to 260°C.

In a preferred embodiment, the component (A) is first partially or completely isolated from the aqueous dispersion obtained in the respective production steps. For example, the graft copolymers (A) may be mixed as a moist or dry crumb/powder (for example having a residual moisture of from 1 to 40%, in particular 20 to 40%) with the other components, complete drying of the graft copolymers (A) then taking place during the mixing.

The thermoplastic molding compositions according to the invention have an excellent high heat resistance (increased glass transition temperature ($T_G$), improved heat deflection temperature (HDT) and VICAT softening temperature (VST)) along with good mechanical properties, in particular enhanced impact strength.

The invention further provides for the use of the inventive thermoplastic molding composition for the production of shaped articles.

Processing may be carried out using the known processes for thermoplast processing, in particular production may be effected by thermoforming, extruding, injection molding, calendaring, blow molding, compression molding, press sintering, deep drawing or sintering; injection molding is preferred.

Preferred is the use of the thermoplastic molding composition according to the invention for applications in the industrial, household and automotive sector. The thermoplastic molding composition is in particular used for electrical and home appliances, machinery parts, textile bobbins and automotive components.

The invention is further illustrated by the examples and the claims.

Examples

Test Methods:

Particle Size $D_w$/ $D_{50}$

For measuring the weight average particle size $D_w$ (in particular the median weight particle diameter $D_{50}$) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution. The calculation of the weight average particle size $D_w$ was performed by means of the formula

$$D_w = sum\ (\ n_i * d_i^4\ )\ /\ sum(\ n_i * d_i^3\ )$$

$n_i$: number of particles of diameter $d_i$.

Molar Mass $M_w$

The weight average molar mass $M_w$ is determined by GPC (solvent: tetrahydrofuran, polystyrene as polymer standard) with UV detection according to DIN 55672-1:2016-03.

Tensile Strength (TS) and Tensile Modulus (TM) Test

Tensile test (ASTM D 638) of PC blends was carried out at 23°C using a Universal testing Machine (UTM) of Lloyd Instruments, UK.

Flexural Strength (FS) and Flexural Modulus (FM) Test

Flexural test of PC blends (ASTM D 790 standard) was carried out at 23°C using a UTM of Lloyd Instruments, UK.

Notched Izod Impact Strength (NIIS) Test

Izod impact tests were performed on notched specimens (ASTM D 256 standard) using an instrument of CEAST, Italy.

Heat deflection temperature (HDT)

Heat deflection temperature test was performed on injection molded specimen (ASTM D 648 standard) using a CEAST, Italy instrument.

VICAT Softening Temperature (VST)

Vicat softening temperature test was performed on injection molded test specimen (ASTM D 1525 -09 standard) using a CEAST, Italy instrument. Test is carried out at a heating rate of 120°C/hr (Method B) at 50 N loads.

Rockwell Hardness (RH)

Hardness of the injection molded test specimen (ISO - 2039/2-11) was tested using a Rockwell hardness tester.

Melt Flow Index (MFI) or Melt Volume Flow Rate (MFR)

MFI/MFR test was performed on pellets (ISO 1133 standard, ASTM 1238, 220°C/10 kg load) using a MFI-machine of CEAST, Italy.
Materials used are:

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization. Finally the fine-particle butadiene rubber latex (S-A1) was cooled below 50°C and the non-reacted monomers were removed partially under vacuum (200 to 500 mbar) at temperatures below 50°C which defines the end of the polymerization.

Then the latex solids (in % per weight) were determined by evaporation of a sample at 180°C for 25 min. in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |
| $D_W$ (nm) | 87 |
| pH | 10.6 |
| Latex solids content (wt.-%) | 42.6 |
| K | 0.91 |

$$K = W * ( 1 -1 .4 * S ) * D_w$$

W = decomposed potassium persulfate [parts per 100 parts rubber]
S = salt amount in percent relative to the weight of solids of the rubber latex
$D_w$ = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (S-A1) was determined. The solid content of the agglomerated butadiene rubber latex (A), the pH value und the median weight particle diameter

$D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 37.4 | 37.4 |
| amount acetic anhydride | Parts | 0.90 | 0.91 |
| amount KOH | Parts | 0.81 | 0.82 |
| concentration KOH solution | wt.-% | 3 | 3 |
| solid content latex A1 | wt.-% | 32.5 | 32.5 |
| Coagulate | Parts | 0.01 | 0.00 |
| pH | | 9.0 | 9.0 |
| $D_{50}$ | Nm | 315 | 328 |

Production of the graft copolymers (A)

59.5 wt.-parts of mixtures of the coarse-particle, agglomerated butadiene rubber latices A1-1 and A1-2 (ratio 50 : 50, calculated as solids of the rubber latices (A1)) were diluted with water to a solid content of 27.5 wt.-% and heated to 55°C. 40.5 wt.-parts of a mixture consisting of 72 wt.-parts styrene, 28 wt.-parts acrylonitrile and 0.4 wt.-parts tert-dodecylmercaptan were added in 3 hours 30 minutes.

At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes.

The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%). The obtained product is graft copolymer (A).

Component (B)

Makrolon® 2856, a polycarbonate commercially available from Covestro AG, Germany, based on bisphenol A having a MFI (300 °C/1.2 kg) of 10.0 g/10 min.

Component (C)

Statistical copolymer from alphamethylstyrene and acrylonitrile with a ratio of polymerized styrene to acrylonitrile of 65:35 with a weight average molecular weight Mw of about 200,000 g/mol, a polydispersity of Mw/Mn of 2.5 and a melt volume flow rate (MVR) (220°C/10 kg load) of 6 to 7 mL/10 minutes, produced by free radical solution polymerization.

Component (D)

Resisfy® R-310, a styrene-maleic anhydride-methylmethacrylate-terpolymer commercially available from Denka Company, Japan.

Component (E)

E1- Penta erythritol tetrastearate (PETS) (Finalux® G748 from Fine Organic Industries Limited, India);

E2- octadecyl di-t-butyl-4-hydroxyhydrocinnamate (Irganox® 1076 from BASF SE, Germany);

E3- Tris (2,4-ditert-butylphenyl)phosphite (Irgafos® 168 from BASF SE)

Thermoplastic compositions

Graft rubber polymer (A), polycarbonate (B), AMSAN-copolymer (C), terpolymer (D), and the afore-mentioned components E1 to E3 were mixed (composition see Table 3, batch size 5 kg) for 2 minutes in a high speed mixer to obtain a good dispersion and a uniform premix and then said premix was melt blended in a twin-screw extruder at a speed of 80 rpm and using an incremental temperature profile from 220 to 260° C for the different barrel zones. The extruded strands were cooled in a water bath, air-dried and pelletized.

Standard test specimens (ASTM test bars) of the obtained blend were injection moulded at a temperature of 220 to 260°C and test specimens were prepared for mechanical testing.

Table 3: Molding Compositions (amounts given in wt.-%)

| Components | comparative example 1 | example 1 | example 2 | example 3 |
|---|---|---|---|---|
| A | 25.79 | 24.80 | 19.84 | 19.84 |
| B | 34.72 | 29.76 | 34.72 | 39.68 |
| C | 38.69 | 24.80 | 29.76 | 24.80 |
| D | 0 | 19.84 | 14.88 | 14.88 |
| E1 | 0.69 | 0.69 | 0.69 | 0.69 |
| E2 | 0.02 | 0.02 | 0.02 | 0.02 |
| E3 | 0.08 | 0.08 | 0.08 | 0.08 |

Table 4: Properties of the Tested Molding Compositions

| Properties | cp. example 1 | example 1 | example 2 | example 3 |
|---|---|---|---|---|
| MFI, g/ 10 min, 220°C, 10 kg load | 3.6 | 2.8 | 3.4 | 2.9 |
| Notched Izod Impact Strength (NIIS) 1/4", kg.cm/cm, 23°C, ASTM D 256 | 48 | 45.5 | 34.5 | 48 |
| NIIS 1/8", kg.cm/cm, 23°C, ASTM D 256 | 63 | 70.5 | 62.5 | 68.5 |
| Tensile Yield Stress, kg/cm$^2$, 50 mm/min, ASTM D 638 | 535 | 540 | 565 | 545 |
| Tensile Modulus, kg/cm$^2$ 50 mm/min, ASTM D 638 | 25,300 | 25,700 | 27,550 | 25,700 |
| Elongation at Break, %, 50 mm/min, ASTM D 638 | >50 | 28 | 33 | >50 |
| Flexural Strength, kg/cm$^2$, 5 mm/min, ASTM D 790 | 885 | 905 | 965 | 945 |
| Flexural Modulus, kg/cm$^2$, 5mm/min, ASTM D 790 | 25350 | 24,500 | 27,050 | 25,850 |
| Rockwell Hardness, R - Scale, ISO 2039/2 | 113 | 114 | 116 | 116 |
| HDT, 1/4", °C, 1.8 MPa, ASTM D 648, annealed 80°C, 4 hrs | 108 | 114 | 113.5 | 115 |
| VST, Rate B, 50 N, 120 °C/hr, °C, ASTM D 1525 | 119.5 | 126 | 126.5 | 128 |
| Glass transition temperature Tg °C | 128.8 & 144.5 | ------- | 132.2 & 148.0 | ------- |

The blends of examples 1 to 3 show an improved heat deflection temperature (HDT) and an improved Vicat softening temperature (VST) along with good mechanical properties.

Furthermore, each blend of examples 1 and 3 shows significantly improved impact strength.

The blend of example 2 shows the best match of the properties relevant for industrial applications. Furthermore the blend according to example 2 causes the lowest costs due to its particular composition.

## Claims

1. Thermoplastic molding composition comprising components A, B, C, D and E:

(A) 10 to 40 wt.-% of at least one graft copolymer (A) consisting of 15 to 60 wt.-% of a graft sheath (A2) and 40 to 85 wt.-% of a graft substrate - an agglomerated butadiene rubber latex - (A1), where (A1) and (A2) sum up to 100 wt.-%, obtained by emulsion polymerization of styrene and acrylonitrile in a weight ratio of 95:5 to 65:35 to obtain a graft sheath (A2), it being possible for styrene and/or acrylonitrile to be replaced partially (less than 50 wt.-%) by alpha-methylstyrene, methyl methacrylate or maleic anhydride or mixtures thereof, in the presence of at least one agglomerated butadiene rubber latex (A1) with a median weight particle diameter $D_{50}$ of 150 to 800 nm,
where the agglomerated rubber latex (A1) is obtained by agglomeration of at least one starting butadiene rubber latex (S-A1) having a median weight particle diameter $D_{50}$ of equal to or less than 120 nm, preferably equal to or less than 110 nm;
(B) 25 to 50 wt.-% of at least one aromatic polycarbonate;
(C) 20 to 40 wt.-% of at least one copolymer (C) of alpha-methylstyrene and acrylonitrile in a weight ratio of from 95:5 to 50:50, it being possible for alpha-methylstyrene and/or acrylonitrile to be partially (less than 50 wt.-%) replaced by methyl methacrylate, maleic anhydride and/or 4-phenylstyrene;
(D) 10 to 25 wt.-% of at least one terpolymer (D) of 50 to 84 wt.-% vinylaromatic monomer, 15 to 35 wt.-% $\alpha$, $\beta$ ethylenically unsaturated dicarboxylic cyclic anhydride, and 1 to 25 wt.-% $C_1$-$C_3$-alkyl-(meth)acrylate;
(E) 0.3 to 5 wt.-% of further additives and/or processing aids (E);

where the components A, B, C, D and E, sum to 100 wt.-%.

2. Thermoplastic molding composition according to claim 1 which comprises:

15 to 35 wt.-%, preferably 18 to 30 wt.-%, component (A),
28 to 45 wt.-%, preferably 29 to 41 wt.-%, component (B),
23 to 35 wt.-%, preferably 24 to 32 wt.-%, component (C),
12 to 22 wt.-%, preferably 13 to 20 wt.-%, component (D),
0.4 to 3 wt.-%, preferably 0.5 to 2 wt.-%, component (E).

3. Thermoplastic molding composition according to claim 1 or 2, wherein terpolymer (D) has a Vicat Softening Temperature (ISO 306, 50N) in the range of from 130 to 150°C.

4. Thermoplastic molding composition according to any of claims 1 to 3, wherein terpolymer (D) is a styrene-maleic anhydride-methyl methacrylate terpolymer.

5. Thermoplastic molding composition according to any of claims 1 to 4, wherein component (C) is a copolymer of alpha-methylstyrene and acrylonitrile in a weight ratio of from 75:25 to 55:45, preferably 70:30 to 60:40.

6. Thermoplastic molding composition according to any of claims 1 to 5, wherein component (C) is a copolymer having a molecular weight Mw of from 20,000 to 220,000 g/mol and a melt flow index (MFI) of 5 to 9 g/10 min.

7. Thermoplastic molding composition according to any of claims 1 to 6, wherein the graft sheath (A2) of graft copolymer (A) is obtained by emulsion polymerization of styrene and acrylonitrile in a weight ratio of 80:20 to 65:35, preferably 74:26 to 70:30.

8. Thermoplastic molding composition according to any of claims 1 to 7, wherein the graft copolymer (A) consists of 20 to 50 wt.-%, preferably 30 to 45 wt.-%, of a graft sheath (A2) and 50 to 80 wt.-%, preferably 55 to 70 wt.-%, of a graft substrate (A1).

9. Thermoplastic molding composition according to any of claims 1 to 8, wherein the polycarbonate (B) is based on 2,2-bis-(4-hydroxyphenyl)-propane.

10. Process for the preparation of the thermoplastic molding composition according to any of claims 1 to 9 by melt mixing the components (A), (B), (C), (D) and (E), at temperatures in the range of from 180°C to 300°C.

11. Shaped article produced from the thermoplastic molding composition according to any of claims 1 to 9.

12. Use of the thermoplastic molding composition according to any of claims 1 to 9 in the industrial, household and automotive sector, in particular for electrical and home appliances, machinery parts, textile bobbins and automotive components.

## Patentansprüche

1. Thermoplastische Formmasse aus den Komponenten A, B, C, D und E:

   (A) 10 bis 40 Gew.-% mindestens eines Pfropfcopolymers (A) bestehend aus 15 bis 60 Gew.-% einer Pfropfhülle (A2) und 40 bis 85 Gew.-% einer Pfropfunterlage - einem agglomerierten Butadienkautschuklatex - (A1), wobei (A1) und (A2) in der Summe 100 Gew.-% ergeben, hergestellt durch Emulsionspolymerisation von Styrol und Acrylnitril im Gewichtsverhältnis 95:5 bis 65:35, um eine Pfropfhülle (A2) zu erhalten, wobei Styrol und/oder Acrylnitril teilweise (weniger als 50 Gew.- %) durch alpha-Methylstyrol, Methylmethacrylat oder Maleinsäureanhydrid oder deren Mischungen ersetzt werden können, in Gegenwart von mindestens einem agglomerierten Butadien-Kautschuklatex (A1) mit einem gewichtsmittleren Teilchendurchmesser $D_{50}$ von 150 bis 800 nm, wobei der agglomerierte Kautschuklatex (A1) durch Agglomeration von mindestens einem Ausgangs-Butadienkautschuklatex (S-A1) mit einem gewichtsmittleren Teilchendurchmesser $D_{50}$ von gleich oder weniger als 120 nm, vorzugsweise gleich oder weniger als 110 nm, erhalten wird;
   (B) 25 bis 50 Gew.-% von mindestens einem aromatischen Polycarbonat;
   (C) 20 bis 40 Gew.-% mindestens eines Copolymers (C) aus alpha-Methylstyrol und Acrylnitril in einem Gewichtsverhältnis von 95:5 bis 50:50, wobei alpha-Methylstyrol und/oder Acrylnitril teilweise (weniger als 50 Gew.-%) durch Methylmethacrylat, Maleinsäureanhydrid und/oder 4-Phenylstyrol ersetzt sein können;
   (D) 10 bis 25 Gew.-% mindestens eines Terpolymers (D) aus 50 bis 84 Gew.-% vinylaromatischem Monomer, 15 bis 35 Gew.-% $\alpha$, $\beta$-ethylenisch ungesättigtem cyclischem Dicarbonsäureanhydrid und 1 bis 25 Gew.-% $C_1$-$C_3$-Alkyl-(meth)acrylat;
   (E) 0,3 bis 5 Gew.-% weiterer Zusatzstoffe und/oder Verarbeitungshilfsmittel (E);

   wobei sich die Komponenten A, B, C, D und E zu 100 Gew.-% addieren.

2. Thermoplastische Formmasse nach Anspruch 1, enthaltend:

   15 bis 35 Gew.-%, vorzugsweise 18 bis 30 Gew.-%, Komponente (A),
   28 bis 45 Gew.-%, vorzugsweise 29 bis 41 Gew.-%, Komponente (B),
   23 bis 35 Gew.-%, vorzugsweise 24 bis 32 Gew.-%, Komponente (C),
   12 bis 22 Gew.-%, vorzugsweise 13 bis 20 Gew.-%, Komponente (D),
   0,4 bis 3 Gew.-%, vorzugsweise 0,5 bis 2 Gew.-%, Komponente (E).

3. Thermoplastische Formmasse nach Anspruch 1 oder 2, wobei das Terpolymer (D) eine Vicat-Erweichungstemperatur (ISO 306, 50N) im Bereich von 130 bis 150°C aufweist.

4. Thermoplastische Formmasse nach einem der Ansprüche 1 bis 3, wobei das Terpolymer (D) ein Styrol-Maleinsäureanhydrid-Methylmethacrylat-Terpolymer ist.

5. Thermoplastische Formmasse nach einem der Ansprüche 1 bis 4, wobei die Komponente (C) ein Copolymer aus alpha-Methylstyrol und Acrylnitril in einem Gewichtsverhältnis von 75:25 bis 55:45, vorzugsweise 70:30 bis 60:40, ist.

6. Thermoplastische Formmasse nach einem der Ansprüche 1 bis 5, **dadurch gekennzeichnet, dass** die Komponente (C) ein Copolymer mit einem Molekulargewicht Mw von 20.000 bis 220.000 g/mol und einem Schmelzflussindex (MFI) von 5 bis 9 g/10 min ist.

7. Thermoplastische Formmasse nach einem der Ansprüche 1 bis 6, wobei die Pfropfhülle (A2) des Pfropfcopolymers (A) durch Emulsionspolymerisation von Styrol und Acrylnitril in einem Gewichtsverhältnis von 80:20 bis 65:35, vorzugsweise 74:26 bis 70:30, erhalten wird.

8. Thermoplastische Formmasse nach einem der Ansprüche 1 bis 7, **dadurch gekennzeichnet, dass** das Pfropfcopolymer (A) aus 20 bis 50 Gew.-%, vorzugsweise 30 bis 45 Gew.-%, einer Pfropfhülle (A2) und 50 bis 80 Gew.-%, vorzugsweise 55 bis 70 Gew.-%, einer Pfropfunterlage (A1) besteht.

**9.** Thermoplastische Formmasse nach einem der Ansprüche 1 bis 8, wobei das Polycarbonat (B) auf 2,2-Bis-(4-hydroxyphenyl)-propan basiert.

**10.** Verfahren zur Herstellung der thermoplastischen Formmasse nach einem der Ansprüche 1 bis 9 durch Mischen der Komponenten (A), (B), (C), (D) und (E) in der Schmelze bei Temperaturen im Bereich von 180°C bis 300°C.

**11.** Formkörper, hergestellt aus der thermoplastischen Formmasse nach einem der Ansprüche 1 bis 9.

**12.** Verwendung der thermoplastischen Formmasse nach einem der Ansprüche 1 bis 9 im Industrie-, Haushalts- und Automobilbereich, insbesondere für Elektro- und Haushaltsgeräte, Maschinenteile, Textilspulen und Automobilteile.

**Revendications**

**1.** Composition de moulage thermoplastique comprenant les composants A, B, C, D et E :

(A) 10 à 40 % en poids d'au moins un copolymère greffé (A) constitué de 15 à 60 % en poids d'une gaine greffée (A2) et de 40 à 85 % en poids d'un substrat greffé - un aggloméré latex de caoutchouc butadiène - (Al), où (Al) et (A2) totalisent jusqu'à 100 % en poids, obtenu par polymérisation en émulsion de styrène et d'acrylonitrile dans un rapport pondéral 10 de 95:5 à 65:35 pour obtenir un greffon gaine (A2), le styrène et/ou l'acrylonitrile pouvant être remplacés partiellement (moins de 50 % en poids) par de l'alphaméthylstyrène, du méthacrylate de méthyle ou de l'anhydride maléique ou leurs mélanges, en présence d'au moins un latex de caoutchouc butadiène aggloméré (Al) avec un diamètre de particule en poids médian D50 de 150 à 800 nm,
où le latex de caoutchouc aggloméré (Al) est obtenu par agglomération d'au moins un latex de caoutchouc butadiène de départ (S-Al) ayant un diamètre particulaire en poids médian D50 égal ou inférieur à 120 nm, de préférence égal ou inférieur à 110 nm ;
(B) 25 à 50 % en poids d'au moins un polycarbonate aromatique ;
(C) 20 à 40 % en poids d'au moins un copolymère (C) d'alpha-méthylstyrène et d'acrylonitrile dans un rapport pondéral de 95:5 à 50:50, l'alphaméthylstyrène et/ou l'acrylonitrile pouvant être partiellement (moins de 50 % en poids) remplacé par du méthacrylate de méthyle, de l'anhydride maléique et/ou du 4-phénylstyrène ;
(D) 10 à 25 % en poids d'au moins un terpolymère (D) de 50 à 84 % en poids de monomère vinylaromatique, 15 à 35 % en poids d'à, anhydride cyclique dicarboxylique à insaturation éthylénique, et 1 à 25 % en poids. -% Cl-C3-alkyl-(méth)acrylate ;
(E) 0,3 à 5 % en poids d'autres additifs et/ou auxiliaires de traitement (E) ;

où les composants A, B, C, D et E totalisent 100 % en poids.

**2.** Composition de moulage thermoplastique selon la revendication 1 qui comprend :

15 à 35 % en poids, de préférence 18 à 30 % en poids, composant (A),
28 à 45 % en poids, de préférence 29 à 41 % en poids, composant (B),
23 à 35 % en poids, de préférence 24 à 32 % en poids, composant (C),
12 à 22 % en poids, de préférence 13 à 20 % en poids, composant (D),
0,4 à 3 % en poids, de préférence 0,5 à 2 % en poids, composant (E).

**3.** Composition de moulage thermoplastique selon la revendication 1 ou 2, dans laquelle le terpolymère (D) a une température de ramollissement Vicat (ISO 306, 50N) dans la plage de 130 à 150°C.

**4.** Composition de moulage thermoplastique selon l'une quelconque des revendications 1 à 3, dans laquelle le terpolymère (D) est un terpolymère styrène-anhydride maléique-méthacrylate de méthyle.

**5.** Composition de moulage thermoplastique selon l'une quelconque des revendications 1 à 4, dans laquelle le composant (C) est un copolymère d'alpha-méthylstyrène et d'acrylonitrile dans un rapport pondéral de 75:25 à 55:45, de préférence 70:30 à 60:40 .

6. Composition de moulage thermoplastique selon l'une quelconque des revendications 1 à 5, dans laquelle le composant (C) est un copolymère ayant un poids moléculaire Mw de 20 000 à 220 000 g/mol et un indice de fluidité à chaud (MFI) de 5 à 9 g/10 min.

7. Composition de moulage thermoplastique selon l'une quelconque des revendications 1 à 6, dans laquelle la gaine greffée (A2) de copolymère greffé (A) est obtenue par polymérisation en émulsion de styrène et d'acrylonitrile dans un rapport pondéral de 80:20 à 65:35, de préférence 74:26 à 70:30.

8. Composition de moulage thermoplastique selon l'une quelconque des revendications 1 à 7, dans laquelle le copolymère greffé (A) est constitué de 20 à 50 % en poids, de préférence de 30 à 45 % en poids, d'une gaine greffée (A2) et de 50 à 80 % en poids, de préférence 55 à 70 % en poids, d'un substrat de greffage (A1).

9. Composition de moulage thermoplastique selon l'une quelconque des revendications 1 à 8, dans laquelle le polycarbonate (B) est à base de 2,2-bis-(4-hydroxyphényl)- propane.

10. Procédé de préparation de la masse à mouler thermoplastique selon l'une quelconque des revendications 1 à 9 par mélange à l'état fondu des composants (A), (B), (C), (D) et (E), à des températures de l'ordre de de 1800C à 3000C.

11. Article façonné réalisé à partir de la composition de moulage thermoplastique selon l'une quelconque des revendications 1 à 9.

12. Utilisation de la composition de moulage thermoplastique selon l'une quelconque des revendications 1 à 9 dans le secteur industriel, ménager et automobile, en particulier pour les appareils électriques et ménagers, les pièces de machines, les bobines textiles et les composants automobiles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4569969 A
- US 4663389 A
- US 20130158183 A
- CN 104177754
- WO 2012022710 A
- WO 2014170406 A
- WO 2014170407 A
- DE 3832396 A
- US 20100168311 A1
- US 20090318604 A1
- DE 2842005 A
- DE 3506472 A
- DE 2420358 A
- DE 2724360 A
- US 2971939 A
- US 3336267 A
- US 3919354 A


### Non-patent literature cited in the description


- **G. LAGALY ; O. SCHULZ ; R. ZIEMEHL.** Dispersionen und Emulsionen: Eine Einführung in die Kolloidik feinverteilter Stoffe einschließlich der Tonminerale. Steinkopf-Verlag, 1997, 282
- Kunststoff-Handbuch ([Plastics Handbook. Carl-Hanser-Verlag, 1969, vol. V, 122
- Plastics Additives Handbook. Hanser Publ, 1996